# EUROPEAN PATENT SPECIFICATION

(11) **EP 2 186 353 B1**
(45) Date of publication and mention of the grant of the patent: **09.12.2015**
(21) Application number: 07794186.2
(22) Date of filing: 23.08.2007
(51) Int. Cl.: H04W 4/00, H04W 88/02, H04L 12/28, H04W 48/20, H04W 76/02

(54) **METHOD FOR SIMPLE RETRIEVAL OF NETWORK ACCESS SELECTION INFORMATION.**
VERFAHREN ZUM EINFACHEN ABRUFEN VON NETZWERKZUGANGSAUSWAHLINFORMATIONEN
PROCÉDÉ POUR UNE EXTRACTION SIMPLE D'INFORMATIONS DE SÉLECTION D'ACCÈS À UN RÉSEAU

(43) Date of publication of application: 19.05.2010
(73) Proprietor: Telefonaktiebolaget LM Ericsson (publ), 164 83 Stockholm (SE)
(72) Inventor: RUNE, Johan, S-181 30 Lidingö (SE)
(74) Representative: Sandstedt, Jonas Sven James
(86) International application number: PCT/SE2007/050576
(87) International publication number: WO 2009/025600

(56) References cited:
- WO-A1-2005/060209
- WO-A1-2005/060294
- WO-A1-2005/060294
- WO-A1-2005/062652
- US-A1- 2007 115 887
- '3rd Generation Partnership Project; Technical Specification Group Services and System Aspects; Architecture Enhancements for on-3GPP accesses (Release 8)' 3GPP TS 23.402 V1.2.1, [Online] 13 August 2007, XP003022773 Retrieved from the Internet: <URL:http://www.3gpp.org/FTP/Specs/html-inf o/23402.htm>
- TOSHIBA AMERICA RESEARCH INC. ET AL.: 'Access Network Discovery', [Online] vol. S2-073404, 27 August 2007 - 31 August 2007, XP003022774 Retrieved from the Internet: <URL:http://www.3gpp.org/ftp/TSG_SA/WG2_Arc h/TSGS2_59_Helsinki/Docs>

## Description

### TECHNICAL AFIELD

The invention relates to a method and system for network access selection according to the preamble of claims 1 and 38, an Access Selection Server (ASS) according to the preamble of claim 23 and an Access Selection Client (ASC) according to the preamble of claim 30.

### BACKGROUND

Third generation mobile systems (3G), based on WCDMA (Wideband Code Division Multiple Access) radio access technology, are being deployed on a broad scale all around the world. However, as user and operator requirements and expectations will continue to evolve a new phase in the project called 3^{rd} Generation Partnership Project (3GPP) has started to consider the next major steps in the evolution of the 3G standard. The terminals used in the network are having more functions integrated which means that an increasing number of access types such as e.g. LTE (Long Term Evolution), WiMAX (Worldwide Interoperability for Microwave Access) and WLAN (Wireless Local Area Network) and new services such as Voice over IP (VoIP) or IP-TV are added to the terminal. This has the implication that there is a need for support from the network to guide the terminal regarding which access to select. The terminal is typically a mobile telephone and is henceforth in the description and claims called a User Equipment, UE. An example can be found in WO 2005/060294.

There is consequently a need for a common core network that can provide access for access networks of different kinds and provide all these new services. One of the main challenges today is therefore to combine a large number of existing networks to provide a packet based IP core network (SAE-Systems Architecture Evolution is a project studying this) which can provide these various services for the customer. The networks of today are optimized for circuit switched voice telephony. GSM Radio, GERAN and UTRAN are examples of radio access networks where the user connects to the core network and depending on if they are using GSM, GPRS or 3G they are redirected through the core network.

SAE is a core network that is completely packet switched and provides a solution to the challenge. SAE may interwork together with circuit switched networks. Handover may also be performed between SAE and circuit switched networks. The access between the UE and an external network (Internet, Intranet, Public Switched telephone network (PSTN)) is provided by the core network and the access network.

In order to provide a platform for the development of network services based on SIP (Session Initiation Protocol) IMS (IP Multimedia Subsystem) is introduced. IMS contains a standardized network architecture within 3GPP for providing multimedia services for the UE. IMS enables a variety of functions, such as authentication, charging and presence available for the developers of different service applications. IMS is highly interesting for wireless access of UE comprising a number of multimedia features (voice, video etc). IMS does not depend on type of access and is based on standard IP connectivity and service control architecture by using Internet-based protocols

Important nodes in the packet based IP core network for data transport are SGSN (Serving GPRS Support Node), GGSN (Gateway GPRS Support Node) and HLR (Home Locations Register). In IMS HLR is a part of HSS (Home Subscriber Server). SGSN is responsible for the delivery of data packets from and to the UE. Together with the HLR it keeps track of the location of the UE and carries out security functions and access control.

GGSN acts as gateway between a wireless data network and other networks such as internet. It is an anchor point that makes the mobility of the UE possible. Within 3GPP, SAE GW/HA takes over some of the tasks for the GGSN. GGSN converts the GPRS packets coming from the SGSN into the appropriate packet data protocol (PDP) format (i.e. IP) and sends them into the IP packet data network. In the other direction, PDP addresses of incoming data packets are converted to the GSM address of the destination user. The readdressed packets are sent to the responsible SGSN. A PDP context is a data structure that which holds information about routing, QoS, billing etc. When a user wants to use a packet based service she has to activate a PDP context. GGSN also works as router and firewall. The HLR/HSS is a central database that keeps details of each SIM/USIM card, such as the International Mobile Subscriber Identity (IMSI), the telephone number, information on allowed services for the subscriber, forbidden roaming areas and current location of the subscriber.

In order to assure the service quality for the end-users in the core network Quality of Service (QoS) is a keyword. Within 3GPP, QoS is a part of the LTE (Long Term Evolution) study aiming for improvements of 3G (third generation) technology to ensure long-term competitiveness. Such improvements relate to service provisioning and cost reduction. Better service will be appreciated by customers and consequently result in higher loyalty and willingness to pay for additional service. Common failures that QoS should deal with are packet loss, delay/latency and jitter.

QoS will enable the home operator to control the service rate individually for each end-user in order to efficiently use the network resources and provide a more "cost-based" service level. Different services need different quality: File transfer protocol (FTP) for instance is not very sensitive to delays while voice and video are very sensitive to delay and variations. Moreover, different customers expect different quality. Some corporate customers do not accept failure in transmissions and are willing to pay for QoS while others accept some failure for a lower price. There are also variations between the expectations for private customers.

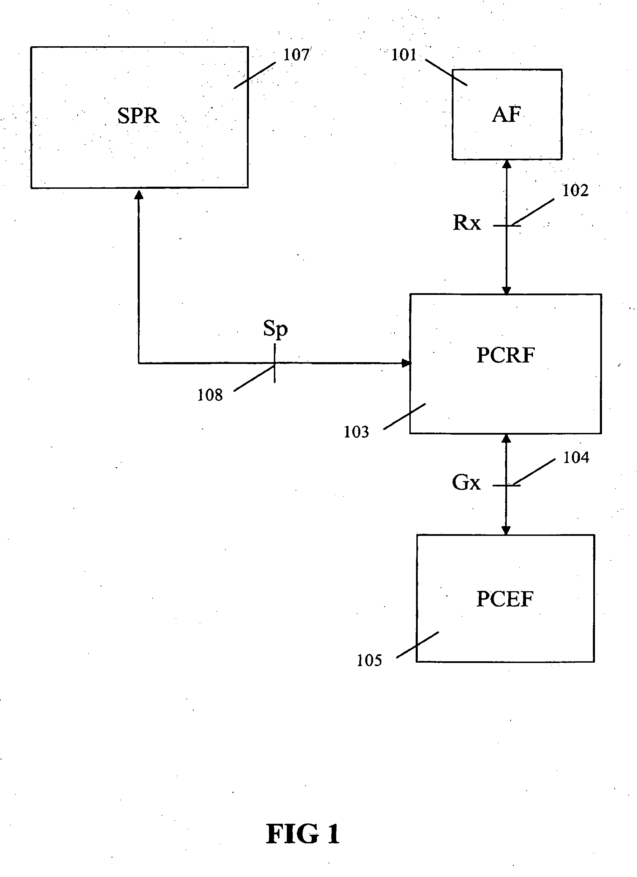

Because of QoS, there is a need in the core network to control the communication between the UE and the external network. Home operators should be able to provide differentiated services for the customers. A new architecture within 3GPP for the core network is available for this purpose. This is called Policy and Charging Control (PCC). It is disclosed in the technical specification 3GPP TS 23.203 v7.3.0, release 7, in which the different functions are specified. The PCC architecture is illustrated in Figure 1. The functions in figure 1 are, according to this specification, defined as follows.

The main parts of the PCC architecture according to 3GPP comprises the following entities: an Application Function (AF) 101, a PCRF (Policy and Charging Rules Function) 103, a Subscription Profile Repository (SPR) 107 and a PCEF (Policy and Charging Enforcement Function), 105. These parts are shown in figure 1 and are nodes within the core network. An entity in a 3GPP system may be realised as node, a part of a node or as different nodes.

The Application Function (AF) 101 is an element offering applications to the UE and has the possibility to request resource allocation via the PCC in the core network. An application function is a service enabler provided for the UE which provides a variety of services, such as video call and web browsing. One example of an application function is a P-CSCF (Proxy - Call Session Control Function). The P-CSCF is a SIP (Session Initiated Protocol) proxy server which is the first point of contact for an IMS (IP Multimedia Subsystem) UE. The AF 101 uses an Rx reference point 102 to provide session information to the PCRF (Policy and Charging Rules Function) 103.

The PCRF 103 is a functional element unique for PCC that encompasses policy control decision and flow based charging control functionalities. The PCRF provides network control regarding the service data flow detection, gating, QoS (Quality of Service) and flow based charging (except credit management) towards the PCEF (Policy and Charging Enforcement Function). The PCRF receives session and media related information from the AF and informs the AF of traffic plane events. A Gx reference point 104 is used for provisioning and removal of PCC rules from the PCRF to the PCEF and the transmission of traffic plane events from the PCEF to the PCRF.

The PCC contains a number of rules defining how to treat received data packages. The PCEF shall select a PCC rule for each received packet by evaluating received packets against service data flow filters of PCC rules in the order of the precedence of the PCC rules. The purpose of a PCC rule is to:
- Detect a packet belonging to a service data flow.
- Identify the type of service that the service data flow contributes to.
- Provide applicable charging parameters for a service data flow.
- Provide policy control for a service data flow.

The PCEF is the functional element that encompasses policy enforcement and flow based charging functionalities. This functional entity is located at the Gateway GPRS Support Node (GGSN) in the GPRS case. It provides control over the user plane traffic handling at the Gateway and its Quality of Service (QoS), and provides service data flow detection and counting as well as online and offline charging interactions. For a service data flow that is under policy control the PCEF shall allow the service data flow to pass through the Gateway 106 if and only if the corresponding gate is open.

The Subscription Profile Repository function (SPR) 107 contains all subscriber/subscription related information needed for subscription-based policies and bearer level charging rules by the PCRF. The SPR may be combined or integrated with another entity_such as the HLR/HSS. The Sp reference point 108 allows the Subscription Profile Repository (SPR) to provide subscription-based input to the PCRF, allows the PCRF to request subscription information related to bearer level policies from the SPR based on subscriber ID and allows the SPR to notify the PCRF when the subscription information has been changed if the PCRF has requested such notifications.

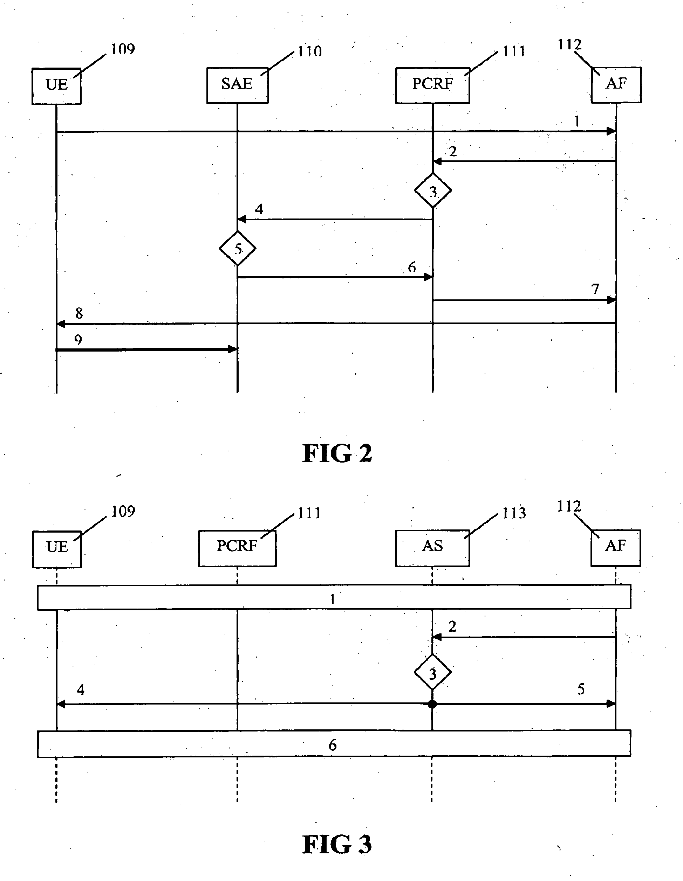

Figure 2 shows a policy related signalling flow in a PCC system in SAE (System Architecture Evolution) intended to establish a QoS bearer for the UE in a 3GPP environment. The establishment is network initiated and triggered by the application's signalling. The UE 109 sends 1 a service request for an application to an AF 112 (a P-CSCF or another type of AF) in the core network. The service could be an IMS service (service intended for IMS) or a non-IMS service (service intended for non-IMS). The AF 112 contacts 2 the PCRF 111 and indicates the type of service requested and its requirements on the communication quality. AF also provides service data flow templates/traffic flow templates, SDF(s)/TFT(s) (protocol identifiers, ports and addresses) for the application's media flow. (In terms of informational content SDTF(s) and TFT(s) are equivalent.

For simplicity only the term TFT will be used in the remainder of the text. It should be interpreted as either TFT or SDTF, whichever is the most appropriate in the present context. With this input data together with applicable policies the PCRF assigns 3 an appropriate QoS to the media flow. The QoS indication is not tied to any particular bearer or access type but a generic indication.

The PCRF 111 sends 4 the selected QoS indication (and charging indications) together with the TFT(s) to the SAE GW/HA 110 (PCEF) and requests it to establish 5 a bearer that matches the indicated QoS to the UE 109. If the currently used access is of a type that supports the concept of network initiated bearer establishment, such as LTE or 3G, the SAE GW/HA establishes the requested bearer. Acknowledgements are sent 6,7 all the way back to the AF 112, which concludes 8 the service signalling towards the UE 109. Then the actual media flow is started 9.

With the increasing number of access types added to the UE's there is a need for support from the core network to guide the UE regarding which access to select in order to provide the communication link with the QoS that the subscriber has paid for. Other aspects that potentially may impact the access selection are e.g. the user's preferences, the operator's policies, cost of network usage, current load conditions, ensuring efficient use of the network resources and type of application. Such access types are e.g. LTE (Long Term Evolution), WiMAX (Worldwide Interoperability for Microwave Access) and WLAN (Wireless Local Area Network). Objectives for the operator are to differentiate the QoS for different users by operating with e.g. Olympic subscriptions (gold, silver, bronze), time varying policies/tariffs and location-based policies. Other objectives are service dependent (best possible access per service) and load management (static or dynamic). Objectives for the user are automated access selection (less complex), automated network discovery, tariff-dependent access priority, defining preferred networks and service-dependent priorities.

Within the PCC architecture there is provided a framework for a multi access steering control. The steering control is based on the distributed approach with an access selection (AS) client (ASC) in the UE and an access selection server (ASS) in the core network. Both the client and the node collect information that is relevant for access selection decisions. The ASS gathers information from the network about load status etc. and information from the UE about all accesses available. This information is used by the ASS in the steering control. The ASS sends control messages based on the stored information to the ASC, thereby enabling control of multiple UE-accesses. The ASS provides the UE AS client with information for access selection and suggests a suitable access. The final decision on access selection is performed by the ASC.

In a first approach within the access steering control the ASC is realized as a shim layer between the application layer and the transport layer in the UE's (IP) protocol stack. The ASC receives indications from the application layer (i.e. from an application running in the UE) about the service request and which applications the UE wants to use via a socket request. This information, together with policies and other relevant information, such as available accesses and possible network load, is then used as input data to the access selection decision. If the current access is selected by the ASC a socket is established and the application's communication can begin. If another access is selected a Mobile IP (MIP) handover to the selected access network is performed or the interface towards the selected address is configured in parallel with the old address. MIP is a protocol that allows mobile device users to move from one network to another while maintaining a permanent IP address.

According to the first approach the multi access steering control identifies the application (service needed) from the port numbers sent with the socket request in order to trigger the access selection decision to infer with the application's requirements of the communication quality. The socket request is in the form of *socket connect*() calls for TCP (Transmission Control Protocol) and *sendmsg()* and *sendto()* calls for UDP (User Datagram Protocol). The steering control consequently identifies capacity and properties of the bearer needed for a particular application in order for the application to run properly. For instance streaming video and voice needs a higher capacity while SMS needs a lower capacity.

TCP (or UDP) ports refer to specific application protocols or uses. Applications use particular application protocols such as IMAP for email, POP3 for receiving emails and HTTP for web browsing. During a socket request the concerned application in the computer or UE sends the port number for the application it wants to use and requests for a transport endpoint which can be bound to a socket address for packet data transfer from and to the computer or UE in the transport layer through a communication connection. A socket consists of a combination of port numbers and IP addresses and an implicit or explicit indication of the transport protocol. In particular it is composed of a transport protocol indication (e.g. TCP or UDP, often implemented implicitly as different types of sockets), the source IP address and port and the destination (remote end-point in a packet-based network) IP address and port.

In a second approach within the access steering control the focus is on the interaction between the access selection functionality and the SAE policy management. This approach is described in a patent application filed on the same day. The ASS is there involved in the IMS signalling in order to insert the access selection in the session setup procedure. In this approach, illustrated in figure 3, an initial IMS session signalling 1 is performed. The AF 112 (the P-CSCF) the contacts 2 the ASS 113 and indicates the type of application that is being established based on CSI (Communication Service Identifier) and SDP (Session Description Protocol) information. Based on this and other relevant input data (load status, available accesses etc) the entity 113 selects 3 an access for the application and informs 4, 5 the UE 109 and the AF 112 (the P-CSCF) of its decision. The IMS session signalling is the continued 5 with bearer establishment via the PCRF 111 and the SAE GW/HA (PCEF) and concluding SIP signalling. If another than the current access was selected, the originating UE sends a SIP (Session Initiation Protocol) reinvite message to the other end reflecting the new access.

It has been apparent that the UE-based method for multi access steering control, with an AS server (ASS) introduced in the core network, is a pragmatic and simple approach which has a lot of benefits in the provision of appropriate access selection decisions. However, there is a need for a sufficient identification of the application during the socket request as proposed in the first approach. Using port numbers is promising but it however needs some improvements.

The reason is that some applications involve preceding service signalling (socket request) and use separate (TCP/UDP) connections for signalling and media (data) flows (in transport layer), e.g. SIP-based (Session Initiation Protocol) applications. The port numbers for the media flow (following the service signalling) may be selected more or less arbitrary during the preceding service signaling.

For such applications the port numbers will not be sufficient to identify the type of media flow (type of application) and its requirement in terms of bearer capacity and QoS. The multi access steering control will face a socket request with unrecognized port numbers indicated. In this situation it cannot make an intelligent access steering decision, because it lacks the required information about the properties and requirement of the application. It may be that the multi access steering control uses other means than port numbers for the identification of an application such as finding out the owner of the process sending the socket call. However, also in such situations the multi access steering control may face a socket request with an unrecognized source application or that the type of media flow to be set up is unknown.

Furthermore, the second approach within multi access steering control focusing on the interaction between the ASS and the SAE policy management also needs some improvements. One reason is that it is completely geared towards IMS-based services. Its integration into the IMS signalling does not take non-IMS based services into account. Another reason is the fact that IMS signalling from the UE is affected which implies a non-trivial interaction between the multi access steering control and the IMS application. While such interaction could provide advantages, it is complex and may be much harder to bring from concept to deployment than a solution that leaves the application unaffected. It is an advantage if the application does not have to be adapted for enabling access selection functionality.

### SUMMARY

The invention intends to remove the above mentioned deficiencies of prior art solutions and to find an improved solution to multi access steering control for a User Equipment (UE) in a communication network. This is accomplished by providing:
The invention relates to a method and system for network access selection comprising an Access Selection Server (ASS) being arranged in a communication network comprising at least one User Equipment (UE) and communication nodes. The ASS collects access selection information used in the network for the selection of network access for the UE in a multi-access environment to a Packet Data Network Gateway (PDN GW). The network access enables a traffic bearer (116) between the UE and the PDN GW for the traffic flow between an application (AP) (115) in the UE (109) via the PDN GW to a first node.

The method and system is particularly characterized in that an Access Selection Client (ASC) arranged in the UE performs activation of new network accesses and/or selection, modification or deactivation of existing network accesses on the basis of the access selection information in order to enable the traffic flow. The selection/activation/modifcation/deactivation of the network access is triggered by a socket request sent from the application (AP) to the ASC for the purpose of establishing means for end-to-end communication the traffic bearer.

The invention further relates to an Access Selection Server (ASS) being arranged in a communication network comprising at least one User Equipment (UE) (109) and communication nodes. The ASS is adapted for collecting access selection information used in the network for the selection of network access for the UE in a multi-access environment to a Packet Data Network Gateway (PDN GW). The network access enables a traffic bearer between the UE and the PDN GW for the traffic flow between an application (AP) in the UE via the PDN GW to a first node. The ASS is particularly characterized in that it is further adapted for sending the access selection information to the UE (109).

The invention also relates to an Access Selection Client (ASC) being arranged in a communication network comprising at least one User Equipment (UE) (109) and communication nodes. The access selection information is used in the network for the selection of network access for the UE in a multi-access environment to a Packet Data Network Gateway (PDN GW). The network access enables a traffic bearer between the UE and the PDN GW for the traffic flow between an application (AP) in the UE via the PDN GW to a first node. The ASC is particularly characterized in that it is arranged in the UE and adapted for performing activation of new network accesses and/or selection, modification or deactivation of existing network accesses on the basis of the access selection information in order to enable the traffic flow. The se!ection/activation/modification/deactivation of the network access is triggered by a socket request sent from the application (AP) to the ASC for the purpose of establishing means for end-to-end communication including the traffic bearer.

One advantage of the present invention is that it provides a simple mechanism for providing relevant input data for multi access steering control concerning applications, which cannot be identified through the port numbers or by finding out the process owner of the socket call and/or whose requirements for data transmission are unknown. A further advantage is that the invention is both applicable for IMS-based and non IMS-based services. Moreover, the invention does not interfere with service related signalling such as SIP signalling. Another advantage is that it leaves the applications unaffected. Moreover, the invention does not interfere with the regular SAE policy machinery in any other way than for information retrieval. Finally, the invention can be used also for known applications for which insufficient information is available in the terminal.

Further advantages are achieved by implementing one or several of the features of the dependent claims which will be explained below.

### BRIEF DESCRIPTION OF THE DRAWINGS

Figure 1 Schematically shows Policy and Charging Control (PCC) according to prior art.
Figure 2 Schematically shows a signalling diagram for policy related signalling in SAE.
Figure 3 Schematically shows a signalling diagram with the interaction between the multi access steering control and the SAE policy related signalling for IMS based services according to one approach to multi access steering control which is disclosed in another pending application.
Figure 4 Schematically shows the Access Selection Control according to the present invention.
Figure 5 Schematically shows the method performed by the Access Selection Server (ASS) and the Access Selection Client (ASC) for collecting access selection information used in the ASC decision of network access.
Figure 6 Schematically shows a signalling diagram for service signalling for the purpose of bearer establishment.
Figure 7 Schematically shows a signalling diagram for an embodiment where the sending of access selection information is made independently of any request from the Access Selection Client.
Figure 8 Schematically shows a signalling diagram for an embodiment where the sending of access selection information is made after a request from the Access Selection Client.

### DETAILED DESCRIPTION

The invention will now be described in detail with reference to embodiments described in the detailed description and shown in the drawings. Figure 1, 2 and 3 have already been described in relation to Background above.

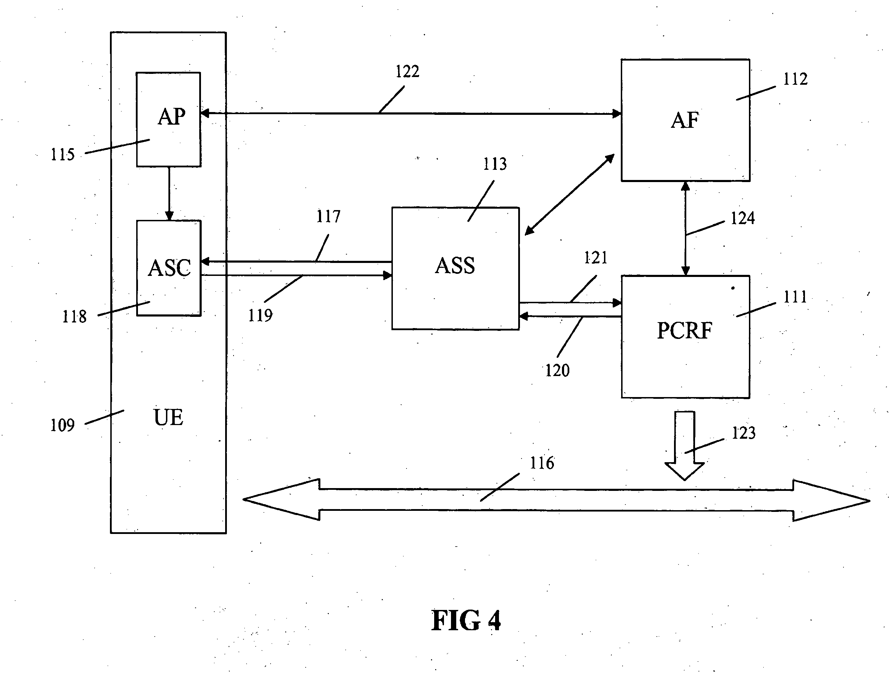

In figure 4 an Access selection Server (ASS) 113 is shown being part of a communication network. The network further comprises a User Equipment (UE) 109 and communication nodes. The term "node" is herein used in a general sense. It should be understood that different nodes may be integrated into a single node and that the functions represented/employed by a node could also be realized as separate nodes.

The nodes shown in figure 4 are the ones relevant in relation to the present invention. One of these nodes is an Application Function 112, which is an element that offers applications (AP) 115 in the UE the possibility to request 122 service and resource allocation in the communication network, the resource being a traffic bearer 116 for traffic flow in the traffic plane from the application to the network via a Packet Data Network Gateway (PDN GW) (not shown). The traffic bearer will be described later. The PDN-GW could be a Systems Architecture Evolution (SAE) Gateway (GW)/Home Agent (HA) in a SAE network in a 3GPP domain. The AF could comprise a Proxy - Call Session Control Function (P-CSCF) for the purpose of IP Multimedia Subsystem (IMS) services. The AF communicates with the UE through default signalling bearers for the purpose of service signalling.

Another one of these nodes is the Policy and Charging Rules Function (PCRF) 111 which is an element that encompasses policy control decisions and flow based charging control function through rules. PCRF provides network control 123 regarding the traffic flow 116 detection, gating, Quality of Service (QoS) and flow based charging. PCRF communicates 124 with the AF112 and receives session and media related information from the AF using a reference point Rx 102 (see figure 1). The rules for the network control of traffic flow defines how to treat received data packages, filter that IP flows are transported in the correct traffic bearer, identify the service the service data flow contributes to and provide policy control for a service data flow. PCRF control the traffic flow in the traffic plane through the PDN GW via a Policy and Charging Enforcement (PCEF) 105 (see figure 1) in the PDN GW.

The ASS 113 is an element that is able to gather information from the network about load status etc. and information from the UE about all network accesses available. This information in some approaches is used by the ASS in the steering control wherein the ASS sends control messages 117 based on the stored information to an AS Client (ASC) 118 arranged in the UE, thereby enabling control of multiply UE-accesses. The ASS provides 117 the ASC with information for network access selection and suggests a suitable access. The final decision on access selection is performed by the ASC. The ASS and ASC communicate through default signalling bearers for the purpose of service signalling 117,119.

In the following specification the ASS 113 and the ASC 118, both being part of a system, are adapted for performing the described signalling flow for the network access selection as also disclosed in the claims. In the embodiment according to the present invention the ASS is arranged in the communication network with at least one User Equipment (UE) 109 and the communication nodes.

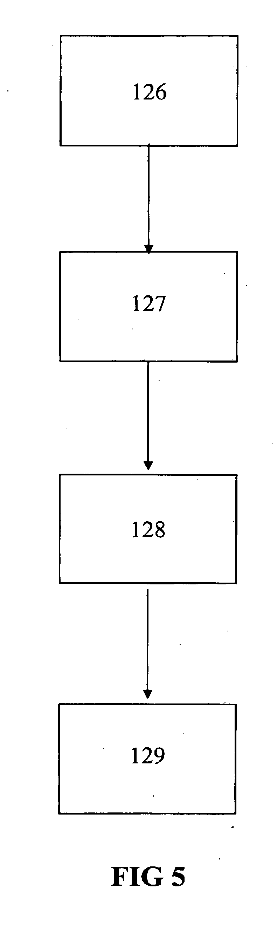

Figure 5 schematically illustrates the method performed by the ASS 113 and ASC 118 for collecting access selection information used in the ASC decision of network access. The method gives the advantage of a simple mechanism for providing relevant input data for multi access steering control by the ASC concerning applications, which cannot be identified by the ASC through the traffic flow port numbers or by finding out the process owner of the socket call and/or whose requirements for data transmission are unknown. Moreover, the invention is both applicable for IMS-based and non IMS-based services and does not interfere with service related signalling such as SIP signalling. Another advantage is that is leaves the applications unaffected. Moreover, the invention does not interfere with the regular SAE policy machinery in any other way than for information retrieval. Finally, the invention can be used also for known applications for which insufficient information is available in the terminal.

With reference to figure 5 the ASS 113 collects 127 access selection information which is used in the network for the selection of network access for the UE in a multi-access environment to a Packet Data Network Gateway (PDN GW). A multi-access environment is where the UE is able to connect to different access technologies, e.g._RadioAccess Technologies (RAT) such as WLAN, 3G and WiMAX. The characteristics of the access selection information will be described further below. The network access will enable a traffic bearer between the UE and the PDN GW for the traffic flow in the traffic plane between the application (AP) 115 in the UE via the PDN GW to a first node. The first node is a node which the application communicates with in an end-to-end communication.

The ASC being arranged in the UE performs 129 activation of new network accesses and/or selection, modification or deactivation of existing network accesses on the basis of the access selection information in order to enable the traffic flow. The characteristics of the access selection information will be described later. The network access may already be prepared, for instance if a default access used for the service signalling (see below) is selected. Consequently, an existing network access could simply be selected.

The selection/activation/modification/deactivation of the network access is triggered by a socket request sent 137 from an application (AP) 115 in the UE 109 to the ASC 118 for the purpose of establishing means for end-to-end communication including the traffic bearer. Means for end-to-end communication is for instance a communication channel or a transport layer connection, with another node. This means that the socket request is preceded by a service signalling where the application asks for a network permission to establish the bearer.

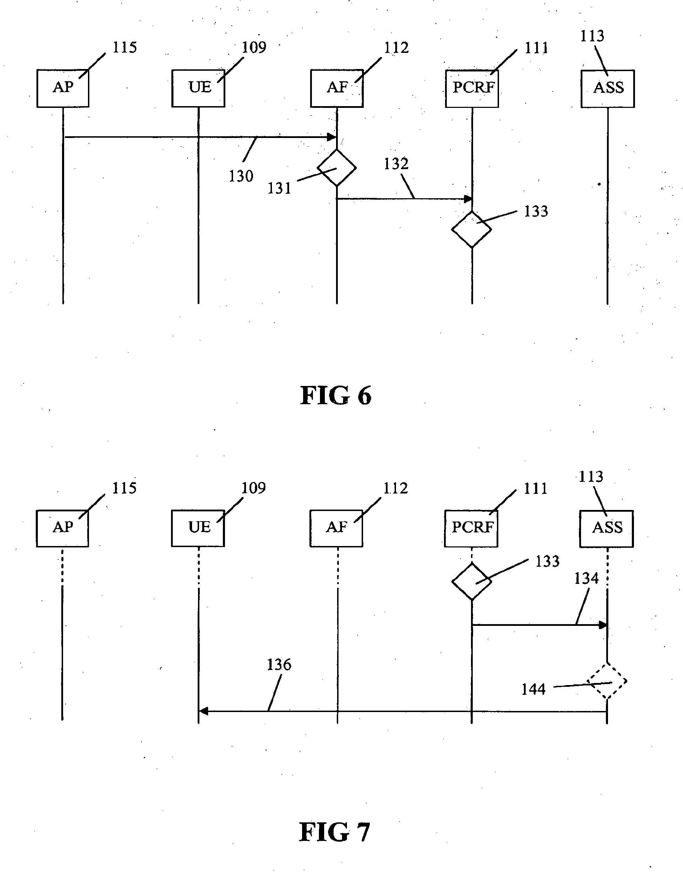

The service signalling from the application will now be described with reference to figure 6. The service signalling is performed for the purpose of requesting the traffic bearer. The application wants to establish a traffic bearer and requests permission from the network to establish such a bearer. During the service signalling the AP 115 contacts 130 an Application Function (AF) 112 or a second node via the AF, providing port numbers, wherein the AF 112 or the second node together with the AP 115 agrees upon the transport protocol, IP addressees and port numbers for the traffic flow, wherein the AF becomes aware of the transport protocol, IP addresses and port numbers. Irrespective of whether the AP forms this agreement with the AF or with the second node via the AF, the signalling procedure makes the AF aware of the transport protocol, the IP addresses and port numbers that have been agreed from the traffic flow.

The AF 112 further contacts the PCRF 111 via the communication link 124, and provides 132 the transport protocol, the addresses and port numbers in the form of Traffic Flow template (TFT) parameters together with information about the properties and communication requirements of the service requested. This means that AF, or the second node reachable via the AF, together with the AP 115 has agreed upon the ports and the IP addresses of the requested traffic bearer for the traffic flow.

Traffic Flow Template parameters are used by the PDN Gateway to filter and identify traffic flows and to ensure that traffic flow for a particular application does not have to share bearer with any other traffic flow. For simplicity only the term TFT will be used in the remainder of the text. It should be interpreted as either TFT or SDTF, whichever is the most appropriate in the present context.

When the PCRF 111 receives the information it assigns 133 Quality of Service (QoS) information to the TFT defining the properties of the requested traffic bearer. This means that the bearer for the traffic flow of the application, which the application service signalling requests, is assigned to a certain Quality of Service, for instance in terms of data transmitting capacity.

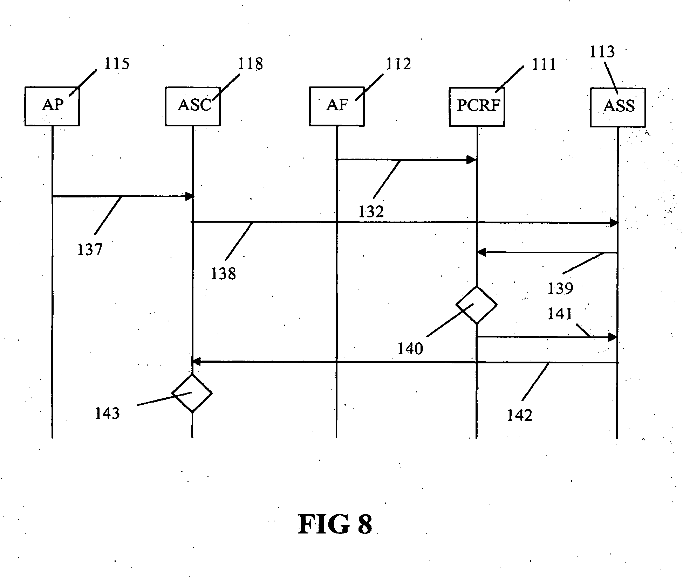

The access selection information comprises the QoS on which basis the selection/activation/modification/deactivation of the network access is performed 143 (see figure 8) by the ASC. The QoS information is assigned 133 by the PCRF 111 to the Traffic Flow Template (TFT) parameters received from the AF 112.

There are two options regarding from where the bearer is established. For both options, the PCRF informs the PDN GW that a traffic bearer with a certain QoS is needed for a traffic flow matching certain TFT parameters. This is done by sending the QoS information and the TFT parameters to the PDN GW. In most access networks, the first option, the traffic bearer is set up from the UE 109 (denoted UE initiated bearer establishment). With such an option the PDN GW will wait for the bearer to be established by the UE. The AP 115 triggers the UE to establish the traffic bearer by sending a socket request to the transport layer in the IP stack (although from the AP's point of view the socket request is primarily a way to establish means for end-to-end communication, i.e. a communication channel or a transport layer connection, with another node, e.g. an AF or another type of peer node). With the ASC 118, the socket request is firstly received by the ASC, which firstly makes the network access selection and then forwards the socket request to the transport layer.

In pure 3GPP access networks (3G-UTRAN and LTE), the second option, the traffic bearer between the AP 115 in the UE 109 and the PDN GW is established by the PDN GW (denoted network initiated bearer establishment) In the second option the PDN GW sends 128 the access selection information to the UE. The establishment is triggered by the PCRF 111 delivering QoS information and TFT parameters to the PDN GW. The PDN GW initiates the establishment and signals the QoS information and the TFT parameters to the UE.

In a first embodiment, the QoS information being access selection information is sent by the network independently of any request from the ASC 118. service signalling preceding the socket request results in the assignment 133 of QoS information to the application's traffic flow. The assignment in turn triggers the sending 134 (see figure 7) of the QoS information and the TFT parameters from the PCRF 111 to the ASS 113.

Within the first embodiment relating to a proactive information transfer without any request from the ASC 118, the ASS 113 decides which access to be selected/activated/modified/deactivated 144 (dotted in figure 7 since this in one option) on the basis of the QoS information received 134. The ASS then sends information about its decision together with the TFT parameters and optionally the QoS information to the ASC 118, so that the ASC can execute the decision.

The ASC uses the received TFT parameters to match the received access selection decision with the socket request (which has socket parameters matching the TFT parameters) to which the access selection decision should be applied. If the first option for bearer establishment (UE initiated) is used the UE then selects/activates/modifies/deactivates the traffic bearer in accordance with the received decision. If the second option for traffic bearer establishment (network initiated) is used, then the ASC checks whether the selected access is the one over which the network initiated traffic bearer is established. If it is, then this network initiated traffic bearer is used for the traffic flow. If the selected access is another then the one which the network initiated traffic bearer is established, then the ASC initiates a handover to the selected network access.

As an alternative within the first embodiment the ASS 113 forwards 136 the received QoS information and TFT parameters to the ASC 118 when receiving it from the PCRF 111. The ASC then uses the QoS information as input data to an access selection decision. As above, the ASC uses the TFT parameters to match the received access selection decision with the socket request (which has socket parameters matching the TFT parameters) to which the access selection decision should be applied. As in the first alternative, if the first option for traffic bearer establishment (UE initiated) is used, the UE selects/activates/modifies/deactivates the traffic bearer in accordance with the access selection decision.

Again as in the first alternative, if the second option for traffic bearer establishment (network initiated) is used, then the ASC checks whether the selected access is the one over which the network initiated traffic bearer is established. If it is, then this network initiated traffic bearer is used for the traffic flow. If the selected access is another then the one which the network initiated traffic bearer is established, then the ASC initiates a handover to the selected network access.

The main aspect of the present invention is to provide the QoS information to the ASC, which will indicate the network access needs for the traffic bearer and helps the ASC in its access selection decision (However, according to one above described option in the first embodiment, an access selection decision based on the QoS information is sent to the ASC instead of the QoS information). According to the first and the second embodiments, the network will proactively send this QoS information (or access selection decision) to the ASC, triggered by the service signalling. According to the third embodiment (will be described later) the ASC will request the QoS information from the network when receiving a socket request from the AP 115.

A second embodiment of the invention can be used only when the second option for traffic bearer establishment (network initiated) is used. In this second embodiment, during the bearer establishment signalling the PDN GW informs the UE which QoS that is supported (which QoS the GW will accept for the traffic bearer) and for which media flow the bearer is intended by sending the QoS information and the TFT parameters to the UE. When the socket request is made by the AP, a traffic bearer is already established with TFT parameters that match the socket parameters (protocol indication, port numbers and IP addresses) and which bearer can carry the traffic flow supplied through the socket for the particular service.

In the second embodiment a module in the UE 109 that handles the signalling with the PDN GW contacts the ASC 118 (a different module in the UE) and informs which QoS that belongs to the TFT parameters received by the PDN GW. The ASC can store this information and wait for the socket request from the AP 115 with the socket parameters that matches these TFT parameters. When the socket request arrives, the ASC knows the QoS assigned by the PCRF 111 for the traffic flow that the socket request relates to. It can use this information as input data for the access selection decision. If the network access selected is the present 3GPP access, the bearer established by the PDN GW is used. If another access is selected a handover is performed.

It may happen that the socket request arrives before the PDN GW has established the traffic bearer. If so, the ASC, when it has received the socket request, has to wait for the TFT parameters and the QoS information from the UE module handling the 3GPP signalling with the PDN GW, before it can perform its access selection.

In a third embodiment, mainly QoS information, which is access selection information, is sent 142 from the ASS to the ASC when requested 138 by the ASC 118 via the ASS 113. The ASC does not have to send the TFT parameters, since in this embodiment the ASC already knows them from the socket parameters in the socket request. This embodiment will be described with reference to figure 4 and 8. In the embodiment the sending 142 of the QoS information to the ASC is indirectly initiated by a socket request sent 137 to the ASC from the application (AP) 115 for the purpose of establishing 143 means for end-to-end communication, including the network access for the traffic flow in the traffic plane. This socket request includes the socket parameters including protocol indicator (explicitly or implicitly as type of socket), IP addresses and the traffic flow port numbers.

In a first alternative according to the third embodiment, the ASC 118 is unable to deduce from the traffic flow port numbers the properties and requirements of the traffic flow the socket is intended for, because the application has included port numbers in the socket request which are unknown to the ASC, i.e. which the ASC cannot associate with a certain application or type of traffic flow. The fact that the port numbers are not identified triggers the ASC to send the request 138 to the ASS.

In a second alternative according to the third embodiment the ASC can identify the application requesting a socket from the port numbers, but this identification is not enough to (sufficiently well) infer the application's communication requirements, e.g. because the media flow's requirements depend on negotiations in the preceding service signaling. Also in these cases the AS client can use the method according to the first alternative to retrieve relevant input data to a well-founded access selection decision.

The ASC 118 sends 138 a request including the socket parameters to the ASS 113, requesting the ASS to send back 142 the QoS information corresponding to the sent traffic flow socket parameters. This communication is illustrated as arrows 117/119 in figure 4.

The ASS further sends 142 the QoS information to the ASC as requested when collected from the PCRF 111, as described later. As an alternative, in order to increase the support from the ASS, could be that the AS server converts the received QoS information into data of a form that is more suitable as input data to the access selection algorithm before transferring the data to the ASC. This may be very useful, since the QoS information delivered from the PCRF 111 may have operator-specific interpretations. According to this alternative, the ASS consequently converts the QoS information into data of a different form before sending it to the ASC as requested.

Upon receiving said request from the ASC, the ASS 113 sends 139 an second request, including the received parameters to the PCRF 111 requesting the PCRF to send back 141 the QoS information corresponding to the parameters. The PCRF further sends 141 the QoS information to the ASS as requested when the received parameters have been compared 140 with its stored TFT parameters, previously sent 132 (see figure 6) to the PCRF by the AF 112 during the service signalling and QoS assignment procedure, to provide 141 the requested QoS information to the ASS.

Within the third embodiment the ASC 118 performs a default network access decision when the socket request is received from the application. When the QoS information then is received from the ASS 113 a handover is made to the access selected, if the selected access is another than the one selected by the default access decision. Alternatively, the ASC retrieves (figure 8) the QoS Information before accepting the socket request. According to this alternative, the ASC does not make a default access selection and accept the socket request before requesting additional information from the ASS 113. Not before the ASS has returned the QoS information does the ASC run the access selection algorithm and accept the socket request. This alternative variation decreases the complexity to a certain extent, but the disadvantage is that the application will experience a longer delay before its communication can commence.

Within one alternative of the first embodiment, see figure 7, the ASS 113 performs the decision 144 of which network access to be selected/activatiated/modificatied/deactivated on the basis of the QoS information received 134 from the PCRF. The ASC then executes the ASS's decision when it has identified the traffic flow to which the decision should be applied by comparing the TFT parameters received 136 from the ASS with the socket parameters received 134/135B/136 by the UE 109 and socket parameters sent to the ASC 118 from the application 115 for the purpose of establishing the traffic flow over the network access. When the parameters received by the UE from the ASS correspond to the parameters of the application the selection/activation/modification/deactivation is performed 143 in accordance with the decision of the ASS.

Within the other alternative of the first embodiment, the ASS does not perform any decision by itself, but instead proactively forwards 136 (possibly after modification to a more suitable form) to the UE the QoS information and TFT parameters received 134 from the PCRF. Also in the second embodiment are the QoS information and the TFT parameters proactively sent to the UE, although in the second embodiment they are sent from the PDN GW instead of from the ASS. In both cases the fact that the ASC 118 can collect parameters and QoS received by the UE, about the assignment of the bearer for the traffic flow, means that the ASC is able to make its access selection decision. The information provided helps the ASC to identify the characteristics and/or requirements/needs of the concerned traffic flow by reading the QoS assigned to the application's media flow.

The advantage of the first and the second embodiments are that the QoS information (or ready-made access selection decision as in one alternative of the first embodiment) is brought quicker to the ASC 118 and it may even arrive before the socket request from the application arrives. With the quicker access selection decisions that this method provides, it would be possible to wait for a well-based decision instead of letting the application start communicating over a default access.

Within the third embodiment the ASC 118 performs 143 the selection/activation/modifcation/deactivation of a network accesses on the basis of the QoS information received 142 by the UE from the ASS 113, see figure 8. The ASC uses the QoS information in the access selection process by rerunning its access selection algorithm (or running it for the first time if it has not run it yet) with the QoS information as additional input data providing information about the application's requirements. The fact that the ASC 118 can request information from the ASS, which in turn retrieves it from the PCRF about the QoS assigned to the bearer for the concerned traffic flow means that the ASC is able to make its access selection decision. The information provided helps the ASC to identify the characteristics and/or requirements/needs of the concerned traffic flow by reading the QoS assigned to the application's traffic flow.

When the access selection decision is made by the ASC 115 it performs a handover between two different network accesses as a part/result of the selection/activation/modification/deactivation. This is if a different access is selected than the default access.

As an option the ASC 118 is able to store the received 136,142 QoS information, so that it is available e.g. when a subsequent message with the same socket parameters is to be sent from a UDP application,

As an option the ASS 113 further subscribes to changes in QoS information from the PCRF 111 in order to cover application property changes, with subsequent consequent QoS changes that may occur without changing the socket parameters. I.e. it could ask the PCRF to send an indication if the QoS information for the concerned protocol indicator, addresses and traffic flow port numbers (i.e. for the matching TFT parameter) changes. The ASS 113 when receiving QoS information changes from the PCRF 111 as a result of the subscription to changes in the QoS information further informs the ASC 118 of these QoS information changes. The ASC would rerun the access selection algorithm and take appropriate actions if needed. Such a subscription to QoS information changes would cover application property changes (controlled via service signaling between the UE and the AF), or between the UE and another node via the AF,_with subsequent consequent QoS changes, that may occur without changing the socket parameters (in terms of protocol indicator, addresses and port numbers).

## Claims

1. A method for network access selection comprising an Access Selection Server (ASS) (113) being arranged in a communication network comprising at least one User Equipment (UE) (109) and communication nodes,
the ASS (113) collecting (127,141) access selection information used in the network for the selection of network access for the UE (109) in a multi-access environment to a Packet Data Network Gateway (PDN GW), the network access enabling a traffic bearer (116) between the UE and the PDN GW for the traffic flow between an application (AP) (115) in the UE (109) via the PDN GW to a first node,
an Access Selection Client (ASC) (118) being arranged in the UE (109) performs (129,143) activation of new network accesses and/or selection, modification or deactivation of existing network accesses on the basis of the access selection information in order to enable the traffic flow (116),
the selection/activation/modification/deactivation (143,144) of the network access being triggered by a socket request sent (137) from the application (AP) to the ASC (118) for the purpose of establishing means for end-to-end communication including the traffic bearer (116),
**characterized in that**
a service signalling being performed for the purpose of requesting the traffic bearer, an Application Function (AF) (112) becoming aware during the service signalling of the transport protocol, IP addresses and port numbers that have been agreed for the traffic flow,
the AF (112) contacting a Policy and Charging Rules Function (PCRF) (111) and provides (132) the transport protocol, the addresses and port numbers in the form of Traffic Flow template (TFT) parameters together width information about the properties and communication requirements of the service requested,
the PCRF (111) assigning (133) Quality of Service (QoS) information to the TFT parameters, the assignment (133) defining the properties of the requested traffic bearer, the access selection information (109) comprising the Quality of Service (QoS) information on which basis the selection/activation/modification/deactivation of the network access is performed (143).

2. Method according to claim 1 wherein the service signalling comprises the step of:
the AP (115) contacting (130) an Application Function (AF) (112) or a second node via the AF (112), providing port numbers, wherein the AF (112) or the second node together with the AP (115) agrees upon the IP addresses and port numbers for the traffic flow.

3. Method according to any of the preceding claims wherein the ASS (113) sends (128,136,142) the access selection information to the UE (109).

4. Method according to any of the preceding claims wherein the assignment (133) of QoS information by the PCRF (111) triggers a sending (134) of the QoS information and the TFT parameters from the PCRF (111) to the ASS (113).

5. Method according to any of the claims 1 - 2 wherein the PDN GW sends (128,136,142) the access selection information to the UE (109).

6. Method according to any of the claims 1 - 3 wherein a socket request sent (137) to the ASC (118) from the application (AP) (115) for the purpose of establishing means for end-to-end communication, including the network access indirectly initiates a sending (142) of the QoS information to the UE (109), the socket request comprising the socket parameters including protocol indicators, IP addresses and the traffic flow port numbers.

7. Method according to claim 6 wherein the ASC (118) sends (138) a request including the socket parameters to the ASS (113), requesting the ASS (113) to send back (142) the QoS information corresponding to the sent traffic flow socket parameters, the ASS (113) further sending (142) the QoS information to the ASC (118) as requested.

8. Method according to any of the claims 1 - 5 wherein the ASS (113) performs (143) the decision of which network access to be selected/activated/modified/deactivated on the basis of the QoS information received 134 from the PCRF (111), the ASC executing the ASS decision when it has identified the traffic flow to which the decision should be applied by comparison between the TFT parameters received (136) by the UE (109) and socket parameters sent to the ASC from the application (AP) (115) for the purpose of establishing the traffic flow over the network access, wherein when the parameters received (142) by the UE (109) corresponds to the parameters of the application (AP) (115) the selection/activation/modification/deactivation is performed (143) in accordance with the decision of the ASS.

9. Method according to any of the claims 6 - 7 wherein the ASC (118) performs (143) the selection/activation/modification/deactivation of a network accesses on the basis of the QoS information received (142) by the UE.

10. Access Selection Server (113) being arranged in a communication network comprising at least one User Equipment (UE) (109) and communication nodes,
the ASS (113) being adapted for collecting (127,141) access selection information used in the network for the selection of network access for the UE (109) in a multi-access environment to a Packet Data Network Gateway (PDN GW), the network access enabling a traffic bearer (116) between the UE and the PDN GW for the traffic flow between an application (AP) (115) in the UE (109) via the PDN GW to a first node,
the ASS (113) further being adapted for sending (128,136,142) the access selection information to the UE (109).
**characterized in that**
the ASS (113) further being adapted for collecting Quality of Service (QoS) information being assigned (133) by a Policy and Charging rules function (PCRF) (111) to Traffic Flow template (TFT) parameters, wherein the access selection information (109) comprises the Quality of Service (QoS) information on which basis selection/activation/modification/deactivation of the network access is performed (143), the assignment defining the properties of a requested traffic bearer and the TFT parameters are being generated during service signalling performed for the purpose of requesting the traffic bearer.

11. ASS (113) according to claim 10 wherein the ASS (113) is further adapted for deciding which access to be selected/activated/modified/deactivated (144) on the basis of the QoS information received (134,135), the ASS (113) further being adapted for then sending (136) the information about the network access together with QoS information and TFT to an ASC in the UE (118).

12. ASS (113) according to claim 10 wherein the ASS is further adapted for upon receiving a request from an Access Selection Client (ASC) (118) in the UE sending (139) an second request including the received parameters of the request to a PCRF (111) requesting the PCRF to send back (141) the QoS information corresponding to the parameters, the ASS forwarding the QoS information to t an ASC (1118) in the UE.

13. Access Selection Client (ASC) (118) being arranged in a communication network comprising at least one User Equipment (UE) (109) and communication nodes,
access selection information being used in the network for the selection of network access for the UE (109) in a multi-access environment to a Packet Data Network Gateway (PDN GW),
the network access enabling a traffic bearer (116) between the UE and the PDN GW for the traffic flow between an application (AP) (115) in the UE (109) via the PDN GW to a first node,
an Access Selection Client (ASC) (118) being arranged in the UE (109) is adapted for performing (129,143) activation of new network accesses and/or selection, modification or deactivation of existing network accesses on the basis of the access selection information in order to enable the traffic flow (116),
the selection/activation/modification/deactivation (143,144) of the network access being triggered by a socket request sent (137) from the application (AP) (115) to the ASC (118) for the purpose of establishing means for end-to-end communication including the traffic bearer (116),
**characterized in that**
the ASC (118) being adapted for performing the selection/activation/modification/deactivation (143,144) of the network access on the basis of Quality of Service (QoS) information being assigned (133) by a Policy and Charging rules function (PCRF) (111) to Traffic Flow template (TFT) parameters, wherein the access selection information (109) comprises the Quality of Service (QoS), the assignment defining the properties of a requested traffic bearer and the TFT parameters are being generated during service signalling performed for the purpose of requesting the traffic bearer.

14. ASC (118) according to claim 13 wherein the ASC is further adapted for receiving (136) information about a network access selected together with QoS information and/or TFT parameters.

15. ASC (118) according to any of the claims 13 - 14 wherein the ASC is further adapted for sending (138) a request including the socket parameters to an Access Selection Server (ASS) (113), requesting the ASS (113) to send back (142) the QoS information corresponding to the sent traffic flow socket parameters.

16. System for network access selection, comprising an Access Selection Server (ASS) (113) being arranged in a communication network comprising at least one User Equipment (UE) (109) and communication nodes,
the ASS (113) being adapted for collecting (127,141) access selection information used in the network for the selection of network access for the UE (109) in a multi-access environment to a Packet Data Network Gateway (PDN GW),
the network access enabling a traffic bearer (116) between the UE and the PDN GW for the traffic flow between an application (AP) (115) in the UE (109) via the PDN GW to a first node,
an Access Selection Client (ASC) (118) being arranged in the UE (109) is adapted for performing (129,143) activation of new network accesses and/or selection, modification or deactivation of existing network accesses on the basis of the access selection information in order to enable the traffic flow (116),
the selection/activation/modification/deactivation (143,144) of the network access being triggered by a socket request sent (137) from the application (AP) to the ASC (118) for the purpose of establishing means for end-to-end communication including the traffic bearer (116).
**characterized in that**
the ASC (118) being adapted for performing the selection/activation/modification/deactivation (143,144) of the network access on the basis of Quality of Service (QoS) information being assigned (133) by a Policy and Charging rules function (PCRF) (111) to Traffic Flow template (TFT) parameters, wherein the access selection information (109) comprises the Quality of Service (QoS), the assignment defining the properties of a requested traffic bearer and the TFT parameters are being generated during service signalling performed for the purpose of requesting the traffic bearer.

## Patentansprüche

1. Verfahren zur Netzwerkzugangsauswahl mit einem Access Selection Server (ASS) (113), der in einem Kommunikationsnetzwerk mit mindestens einem User Equipment (UE) (109) und Kommunikationsknoten angeordnet ist,
wobei der ASS (113) Zugangsauswahlinformation sammelt (127, 141), die in dem Netzwerk für die Auswahl des Netzwerkzugangs für das UE (109) in einer Mehrfachzugangsumgebung zu einem Packet Data Network Gateway (PDN GW) verwendet wird, wobei der Netzwerkzugang einen Traffic-Bearer (116) zwischen dem UE und dem PDN GW für den Verkehrsfluss zwischen einer Anwendung (AP) (115) in dem UE (109) über den PDN GW zu einem ersten Knoten freigibt,
wobei ein Access Selection Client (ASC) (118), der in der UE (109) eingerichtet ist, eine Aktivierung neuer Netzzugänge und / oder die Auswahl, Modifikation oder Inaktivierung der vorhandenen Netzwerkzugänge auf Grundlage der Zugangsauswahlinformation durchführt (129,143), um den Verkehrsfluss (116) freizugeben,
wobei die Auswahl / Aktivierung / Modifikation / Deaktivierung (143,144) des Netzwerkzugangs von einer Anschlussanfrage ausgelöst wird, die von der Anwendung (AP) zu dem ASC (118) zum Zwecke der Einrichtung von Mitteln zur Ende-zu-Ende-Kommunikation einschließlich des Traffic-Bearers (116) gesendet (137) wurde,
**dadurch gekennzeichnet, dass**
eine Dienst-Signalisierung für den Zweck der Anfrage an den Traffic-Bearer durchgeführt wird, wobei eine Application Function (AF) (112) während der Dienst-Signalisierung des Transportprotokolls, der IP-Adressen und der Port-Nummern, die für den Verkehrsfluss vereinbart wurden, unterrichtet wird,
wobei die AF (112) eine Policy and Charging Rules Function (PCRF) (111) kontaktiert, und das Transportprotokoll, die Adressen und Portnummern in Form von Traffic Flow Template (TFT) Parametern zusammen mit Information über die Eigenschaften und Kommunikationsanfragen des angefragten Dienstes bereitstellt (132),
wobei die PCRF (111) die Quality of Service (QoS) Information zu den TFT Parametern zuordnet (133), wobei die Zuordnung (133) die Eigenschaften des angefragten Traffic-Bearers definiert, wobei die Zugangsauswahlinformation (109) die Quality of Service (QoS) Information umfasst, auf deren Grundlage die Auswahl / Aktivierung / Modifikation / Deaktivierung des Netzwerkzugangs durchgeführt wird (143).

2. Verfahren nach Anspruch 1, wobei die Dienstsignalisierung den Schritt umfasst:
die AP (115) kontaktiert (130) eine Application Function (AF) (112) oder einen zweiten Knoten über die AF (112), wobei sie Port-Nummern bereitstellt, wobei die AF (112) oder der zweite Knoten zusammen mit der AP (115) die IP-Adressen und Port-Nummern für den Verkehrsfluss vereinbart.

3. Verfahren nach einem der vorhergehenden Ansprüche, wobei die ASS (113) die Zugangsauswahlinformation zu dem UE (109) sendet (128, 136, 142).

4. Verfahren nach einem der vorhergehenden Ansprüche, wobei die Zuordnung (133) der QoS Information durch die PCRF (111) ein Senden (134) der QoS Information und der TFT Parameter von der PCRF (111) zu dem ASS (113) auslöst.

5. Verfahren nach einem der Ansprüche 1 - 2, wobei der PDN GW die Zugangsauswahlinformation an das UE (109) sendet (128, 136, 142).

6. Verfahren nach einem der Ansprüche 1 - 3, wobei eine Anschlussanfrage, die an die ASC (118) von der Anwendung (AP) (115) zum Zwecke der Einrichtung der Mittel für die Ende-zu-Ende-Kommunikation einschließlich des Netzwerkzugangs gesendet (137) wurde, indirekt ein Senden (142) der QoS Information zu dem UE (109) initiiert, wobei die Anschlussanfrage die Anschlussparameter einschließlich Protokollindikatoren, IP-Adressen und der Verkehrsflussportnummern umfasst.

7. Verfahren nach Anspruch 6, wobei der ASC (118) eine Anfrage einschließlich der Anschlussparameter an den ASS (113) sendet (138), wobei der ASS (113) angefragt wird, die QoS Information zurückzusenden (142), die dem geschickten Verkehrsflussanschlussparameter entspricht, wobei der ASS (113) außerdem die QoS Information an den ASC (118) sendet (142) wie angefragt.

8. Verfahren nach einem der Ansprüche 1 - 5, wobei der ASS (113) die Entscheidung durchführt (143), welcher Netzwerkzugang auf der Grundlage der QoS Information, die von der PCRF (111) empfangen 134 wurde, ausgewählt / aktiviert / modifiziert / deaktiviert wird, wobei der ASC die ASS Entscheidung ausführt, wenn er den Verkehrsfluss identifiziert hat, auf den die Entscheidung durch einen Vergleich zwischen den TFT Parametern, die von der UE (109) empfangen (136) wurden, und Anschlussparametern, die zu der ASC von der Applikation (AP) (115) zum Zwecke der Einrichtung des Verkehrsflusses über den Netzwerkzugang geschickt wurden, angewendet werden sollte, wobei, wenn die Parameter, die von der UE (109) empfangen (142) wurden, den Parametern der Applikation (AP) (1,15) entsprechen, die Auswahl / Aktivierung / Modifikation / Deaktivierung in Übereinstimmung mit der Entscheidung des ASS durchgeführt (143) wird.

9. Verfahren nach einem der Ansprüche 6 - 7, wobei der ASC (118) die Auswahl / Aktivierung / Modifikation / Deaktivierung von Netzwerkzugängen auf der Grundlage der QoS Information, die von dem UE empfangen wurde (142), durchführt (143).

10. Zugangsauswahlserver (113), der in einem Kommunikationsnetzwerk mit mindestens einem User Equipment (UE) (109) und Kommunikationsknoten angeordnet ist,
wobei der ASS (113) eingerichtet ist, Zugangsauswahlinformation zu sammeln (127, 141), die in dem Netzwerk für die Auswahl des Netzwerkzugangs für die UE (109) in einer Mehrfachzugangsumgebung zu einem Packet Data Network Gateway (PDN GW) verwendet wird, wobei der Netzwerkzugang einen Traffic-Bearer (116) zwischen dem UE und dem PDN GW für den Verkehrsfluss zwischen einer Anwendung (AP) (115) in dem UE (109) über den PDN GW zu einem ersten Knoten freigibt,
wobei der ASS (113) außerdem eingerichtet ist, Zugangsauswahlinformation an das UE (109) zu senden (128, 136, 142),
**dadurch gekennzeichnet, dass**
der ASS (113) außerdem eingerichtet ist, Ouality of Service (QoS) Information zu sammeln, die von einer Policy and Charging Rules Function (PCRF) (111) zu Traffic Flow Template (TFT) Parametern zugeordnet (133) ist, wobei die Zugangsauswahlinformation (109) die Quality of Service (QoS) Information umfasst, auf welcher Grundlage die Auswahl / Aktivierung / Modifikation / Deaktivierung des Netzwerkzugangs durchgeführt wird (143),
wobei die Zuordnung, welche die Eigenschaften eines angefragten Traffic-Bearers definiert, und die TFT Parameter während einer Dienstsignalisierung, die für den Zweck der Anfrage des Traffic-Bearer durchgeführt wird, generiert werden.

11. ASS (113) nach Anspruch 10, wobei der ASS (113) außerdem eingerichtet ist, um zu entscheiden, welcher Zugang auf der Basis der erhaltenen (134, 135) QoS Information ausgewählt / aktiviert / modifiziert / deaktiviert (144) wird, wobei der ASS (113) außerdem eingerichtet ist, dann die Information über den Netzwerkzugang zusammen mit QoS Information und TFT zu einem ASC in der UE (118) zu senden (136).

12. ASS (113) nach Anspruch 10, wobei der ASS außerdem eingerichtet ist, auf den Empfang einer Anfrage von einem Access Selection Client (ASC) (118) in der UE hin eine zweite Anfrage einschließlich der empfangenen Parameter der Anfrage zu einer PCRF (111) zu senden (139), wobei die PCRF angefragt wird, die QoS Information, die den Parametern entspricht, zurückzusenden (141), wobei die ASS die QoS Information zu einer ASC (118) in dem UE weiterleitet.

13. Access Selection Client (ASC) (118), der in einem Kommunikationsnetz mit mindestens einem User Equipment (UE) (109) und Kommunikationsknoten angeordnet ist,
wobei Zugangsauswahlinformation in dem Netzwerk für die Auswahl des Netzwerkzugangs für den UE (109) in einer Mehrfachzugangsumgebung zu einem Packet Data Network Gateway (PDN GW) verwendet wird,
wobei der Netzwerkzugang einen Traffic-Bearer (116) zwischen dem UE und dem PDN GW für den Verkehrsfluss zwischen einer Anwendung (AP) (115) in dem UE (109) über den PDN GW zu einem ersten Knoten freigibt,
wobei ein Access Selection Client (ASC) (118), der in dem UE (109) angeordnet ist, eingerichtet ist, eine Aktivierung neuer Netzwerkzugänge und / oder die Auswahl, Modifikation oder Inaktivierung der vorhandenen Netzwerkzugänge auf Grundlage der Zugangsauswahlinformationen durchzuführen (129, 143), um den Verkehrsstrom (116) freizugeben,
wobei die Auswahl / Aktivierung / Modifikation / Deaktivierung (143, 144) des Netzwerkzugangs durch eine Annschlussanfrage ausgelöst wird, die von der Anwendung (AP) (115) zu dem ASC (118) zum Zwecke der Einrichtung von Mitteln zur Ende-zu-Ende-Kommunikation einschließlich des Traffic-Bearers (116) gesendet (137) wird,
**dadurch gekennzeichnet, dass**
der ASC (118) eingerichtet ist, die Auswahl / Aktivierung / Modifikation / Deaktivierung (143, 144) des Netzwerkzugangs auf der Grundlage von Quality of Service (QoS) Information durchzuführen, die durch eine Policy and Charging Rules Function (PCRF) (111) zu Traffic Flow Template (TFT) Parametern zugeordnet (133) ist, wobei die Zugangsauswahlinformation (109) die Quality of Service (QoS) umfasst, wobei die Zuordnung die Eigenschaften eines angefragten Traffic-Bearers definiert, und wobei die TFT Parameter während der Dienst-Signalisierung erzeugt werden, die zum Zwecke der Anfrage an den Traffic-Bearer durchgeführt wird.

14. ASC (118) nach Anspruch 13, wobei der ASC außerdem eingerichtet ist, Information über einen Netzwerkzugang zu empfangen (136), der zusammen mit QoS Information und / oder TFT Parametern ausgewählt wurde.

15. ASC (118) nach einem der Ansprüche 13 - 14, wobei der ASC außerdem eingerichtet ist, eine Anfrage einschließlich der Anschlussparameter zu einem Access Selection Server (ASS) (113) zu senden (138), wobei der ASS (113) angefragt wird, die QoS Information, die den gesendeten Verkehrsflussanschlussparametern entspricht, zurückzusenden (142).

16. System zur Netzwerkzugangsauswahl mit einem Access Selection Server (ASS) (113), der in einem Kommunikationsnetzwerk mit mindestens einem User Equipment (UE) (109) und Kommunikationsknoten angeordnet ist,
wobei der ASS (113) eingerichtet ist, Zugangsauswahlinformation zu sammeln (127, 141), die in dem Netzwerk für die Auswahl des Netzwerkzugangs für die UE (109) in einer Mehrfachzugangsumgebung zu einem Packet Data Network Gateway (PDN GW) verwendet wird,
wobei der Netzwerkzugang einen Traffic-Bearer (116) zwischen dem UE und dem PDN GW für den Verkehrsfluss zwischen einer Anwendung (AP) (115) in dem UE (109) über den PDN GW zu einem ersten Knoten freigibt,
wobei ein Access Selection Client (ASC) (118), der in dem UE (109) angeordnet ist, eingerichtet ist, eine Aktivierung der neuen Netzwerkzugänge und / oder Auswahl, Modifikation oder Inaktivierung der vorhandenen Netzwerkzugänge auf der Grundlage der Zugangsauswahlinformation durchzuführen (129,143), um den Verkehrsfluss (116) freizugeben,
wobei die Auswahl / Aktivierung / Modifikation / Deaktivierung (143,144) des Netzwerkzugangs von einer Anschlussanfrage, die von der Anwendung (AP) zu dem ASC (118) zum Zwecke der Einrichtung von Mitteln zur Ende-zu-Ende-Kommunikation einschließlich des Traffic-Bearers (116) gesendet (137) wurde, ausgelöst wird,
**dadurch gekennzeichnet, dass**
der ASC (118) eingerichtet ist, die Auswahl / Aktivierung / Modifikation / Deaktivierung (143,144) des Netzwerkzugangs auf der Grundlage von Quality of Service (QoS) Information, die durch eine Policy and Charging Rules Funktion (PCRF) (111) zu Traffic Flow Template (TFT) Parametern zugeordnet (133) ist, durchzuführen, wobei die Zugangsauswahlinformation (109) die Quality of Service (QoS), die Zuordnung, die die Eigenschaften des angefragten Traffic-Bearer definiert, umfasst, und wobei die TFT Parameter während der Dienstsignalisierung erzeugt werden, die zum Zwecke der Anfrage an den Traffic-Bearer durchgeführt wird.

## Revendications

1. Procédé de sélection d'accès réseau comprenant un serveur de sélection d'accès (ASS) (113) agencé dans un réseau de communication comprenant au moins un équipement d'utilisateur (UE) (109) et des noeuds de communication ;
le serveur ASS (113) collectant (127, 141) des informations de sélection d'accès utilisées dans le réseau en vue de la sélection de l'accès réseau de l'équipement UE (109) dans un environnement d'accès multiple à une passerelle de réseau de données en paquets (PDN GW), l'accès réseau autorisant une porteuse de trafic (116) entre l'équipement UE et la passerelle PDN GW pour le flux de trafic entre une application (AP) (115) dans l'équipement UE (109), par l'intermédiaire de la passerelle PDN GW à un premier noeud ;
un dispositif client de sélection d'accès (ASC) (118) agencé dans l'équipement UE (109) mettant en oeuvre (129, 143) une activation de nouveaux accès réseau et/ou une sélection, une modification ou une désactivation d'accès réseau existants, sur la base des informations de sélection d'accès, afin de permettre le flux de trafic (116) ;
la sélection / activation / modification / désactivation (143, 144) de l'accès réseau étant déclenchée par une demande de connecteur envoyée (137) de l'application (AP) au dispositif client ASC (118), dans le but d'établir un moyen de communication de bout en bout incluant la porteuse de trafic (116) ;
**caractérisé en ce que** :
une signalisation de service est mise en oeuvre dans le but de demander la porteuse de trafic, une fonction d'application (AF) (112) ayant connaissance, au cours de la signalisation de service, du protocole de transport, d'adresses IP et de numéros de ports qui ont été convenus pour le flux de trafic ;
la fonction AF (112) contacte une fonction de règles de facturation et politiques (PCRF) (111) et fournit (132) le protocole de transport, les adresses et les numéros de ports, sous la forme de paramètres de modèle de flux de trafic (TFT), conjointement avec des informations sur les propriétés et les exigences de communication du service demandé ;
la fonction PCRF (111) affecte (133) des informations de qualité de service (QoS) aux paramètres de modèle TFT, l'affectation (133) définissant les propriétés de la porteuse de trafic demandée, les informations de sélection d'accès (109) comprenant les informations de qualité de service (QoS) sur la base desquelles la sélection / activation / modification / désactivation de l'accès réseau est mise en oeuvre (143).

2. Procédé selon la revendication 1, dans lequel la signalisation de service comprend l'étape ci-dessous dans laquelle :
l'application AP (115) contacte (130) une fonction d'application (AF) (112) ou un second noeud par le biais de la fonction AF (112), fournit des numéros de ports, dans lequel la fonction AF (112) ou le second noeud, conjointement avec l'application AP (115), convient des adresses IP et des numéros de ports pour le flux de trafic.

3. Procédé selon l'une quelconque des revendications précédentes, dans lequel le serveur ASS (113) envoie (128, 136, 142) les informations de sélection d'accès à l'équipement UE (109).

4. Procédé selon l'une quelconque des revendications précédentes, dans lequel l'affectation (133) d'informations de qualité QoS, par la fonction PCRF (111), déclenche un envoi (134) des informations de qualité QoS et des paramètres de modèle TFT, de la fonction PCRF (111) au serveur ASS (113).

5. Procédé selon l'une quelconque des revendications 1 à 2, dans lequel la passerelle PDN GW envoie (128, 136, 142) les informations de sélection d'accès à l'équipement UE (109).

6. Procédé selon l'une quelconque des revendications 1 à 3, dans lequel une demande de connecteur envoyée (137) au dispositif client ASC (118) à partir de l'application (AP) (115) dans le but d'établir un moyen de communication de bout en bout, incluant l'accès réseau, initie indirectement un envoi (142) des informations de qualité QoS à l'équipement UE (109), la demande de connecteur comprenant les paramètres de connecteur incluant des indicateurs de protocole, des adresses IP et les numéros de ports de flux de trafic.

7. Procédé selon la revendication 6, dans lequel le dispositif client ASC (118) envoie (138) une demande incluant les paramètres de connecteur au serveur ASS (113), demandant au serveur ASS (113) de renvoyer (142) les informations de qualité QoS correspondant aux paramètres de connecteur de flux de trafic envoyés, le serveur ASS (113) envoyant en outre (142) les informations de qualité QoS au dispositif client ASC (118), telles que demandées.

8. Procédé selon l'une quelconque des revendications 1 à 5, dans lequel le serveur ASS (113) met en oeuvre (143) la décision consistant à déterminer quel accès réseau doit être sélectionné / activé / modifié / désactivé sur la base des informations de qualité QoS reçues (134) à partir de la fonction PCRF (111), le dispositif client ASC exécutant la décision de serveur ASS lorsqu'il a identifié le flux de trafic auquel la décision doit être appliquée par une comparaison entre les paramètres de modèle TFT reçus (136) par l'équipement UE (109) et des paramètres de connecteur envoyés au dispositif client ASC à partir de l'application (AP) (115), dans le but d'établir le flux de trafic sur l'accès réseau, dans lequel, lorsque les paramètres reçus (142) par l'équipement UE (109) correspondent aux paramètres de l'application (AP) (115), la sélection / activation / modification / désactivation est mise en oeuvre (143) selon la décision du serveur ASS.

9. Procédé selon l'une quelconque des revendications 6 à 7, dans lequel le dispositif client ASC (118) met en oeuvre (143) la sélection / activation / modification / désactivation des accès réseau sur la base des informations de qualité QoS reçues (142) par l'équipement UE.

10. Serveur de sélection d'accès (113) agencé dans un réseau de communication comprenant au moins un équipement d'utilisateur (UE) (109) et des noeuds de communication ;
le serveur ASS (113) étant apte à collecter (127, 141) des informations de sélection d'accès utilisées dans le réseau pour la sélection de l'accès réseau de l'équipement UE (109) dans un environnement d'accès multiple à une passerelle de réseau de données en paquets (PDN GW), l'accès réseau autorisant une porteuse de trafic (116) entre l'équipement UE et la passerelle PDN GW pour le flux de trafic entre une application (AP) (115) dans l'équipement UE (109), par l'intermédiaire de la passerelle PDN GW à un premier noeud ;
le serveur ASS (113) étant en outre apte à envoyer (128, 136, 142) les informations de sélection d'accès à l'équipement UE (109) ;
**caractérisé en ce que** :
le serveur ASS (113) est en outre apte à collecter des informations de qualité de service (QoS) affectées (133), par une fonction de règles de facturation et politiques (PCRF) (111), à des paramètres de modèle de flux de trafic (TFT), dans lequel les informations de sélection d'accès (109) comportent les informations de qualité de service (QoS) sur la base desquelles la sélection / activation / modification / désactivation de l'accès réseau est mise en oeuvre (143), l'affectation définissant les propriétés d'une porteuse de trafic demandée, et les paramètres de modèle TFT étant générés au cours d'une signalisation de service mise en oeuvre dans le but de demander la porteuse de trafic.

11. Serveur ASS (113) selon la revendication 10, dans lequel le serveur ASS (113) est en outre apte à décider quel accès doit être sélectionné / activé / modifié / désactivé (144) sur la base des informations de qualité QoS reçues (134, 135), le serveur ASS (113) étant en outre apte à envoyer ensuite (136) les informations connexes à l'accès réseau conjointement avec des informations de qualité QoS et des paramètres de modèle TFT, à un dispositif client ASC dans l'équipement UE (118).

12. Serveur ASS (113) selon la revendication 10, dans lequel le serveur ASS est en outre apte à, suite à la réception d'une demande provenant d'un dispositif client de sélection d'accès (ASC) (118) dans l'équipement UE, envoyer (139) une seconde demande incluant les paramètres reçus de la demande, à une fonction PCRF (111), demandant à la fonction PCRF de renvoyer (141) les informations de qualité QoS correspondant aux paramètres, le serveur ASS acheminant les informations de qualité QoS vers un dispositif client ASC (118) dans l'équipement UE.

13. Dispositif client de sélection d'accès (ASC) (118) agencé dans un réseau de communication comprenant au moins un équipement d'utilisateur (UE) (109) et des noeuds de communication ;
des informations de sélection d'accès étant utilisées dans le réseau pour la sélection d'un accès réseau de l'équipement UE (109) dans un environnement d'accès multiple à une passerelle de réseau de données en paquets (PDN GW) ;
l'accès réseau permettant une porteuse de trafic (116) entre l'équipement UE et la passerelle PDN GW pour le flux de trafic entre une application (AP) (115) dans l'équipement UE (109), par l'intermédiaire de la passerelle PDN GW vers un premier noeud ;
un dispositif client de sélection d'accès (ASC) (118) agencé dans l'équipement UE (109) est apte à mettre en oeuvre (129, 143) l'activation de nouveaux accès réseau et/ou la sélection, la modification ou la désactivation d'accès réseau existants, sur la base des informations de sélection d'accès, en vue de permettre le flux de trafic (116) ;
la sélection / activation / modification / désactivation (143, 144) de l'accès réseau étant déclenchée par une demande de connecteur envoyée (137) de l'application (AP) (115) au dispositif client ASC (118), dans le but d'établir un moyen de communication de bout en bout incluant la porteuse de trafic (116) ;
**caractérisé en ce que** :
le dispositif client ASC (118) est apte à mettre en oeuvre la sélection / activation / modification / désactivation (143, 144) de l'accès réseau, sur la base d'informations de qualité de service (QoS) qui sont affectées (133) par une fonction de règles de facturation et politiques (PCRF) (111) à des paramètres de modèle de flux de trafic (TFT), dans lequel les informations de sélection d'accès (109) comportent la qualité de service (QoS), l'affectation définissant les propriétés d'une porteuse de trafic demandée et les paramètres de modèle TFT étant générés au cours d'une signalisation de service mise en oeuvre dans le but de demander la porteuse de trafic.

14. Dispositif client ASC (118) selon la revendication 13, dans lequel le dispositif client ASC est en outre apte à recevoir (136) des informations connexes à un accès réseau sélectionné, conjointement avec des informations de qualité QoS et/ou des paramètres de modèle TFT.

15. Dispositif client ASC (118) selon l'une quelconque des revendications 13 à 14, dans lequel le dispositif client ASC est en outre apte à envoyer (138) une demande incluant les paramètres de connecteur à un serveur de sélection d'accès (ASS) (113), demandant au serveur ASS (113) de renvoyer (142) les informations de qualité QoS correspondant aux paramètres de connecteur de flux de trafic envoyés.

16. Système pour une sélection d'accès réseau, comprenant un serveur de sélection d'accès (ASS) (113) agencé dans un réseau de communication comprenant au moins un équipement d'utilisateur (UE) (109) et des noeuds de communication ;
le serveur ASS (113) étant apte à collecter (127, 141) des informations de sélection d'accès utilisées dans le réseau pour la sélection d'un accès réseau de l'équipement UE (109) dans un environnement d'accès multiple à une passerelle de réseau de données en paquets (PDN GW) ;
l'accès réseau permettant une porteuse de trafic (116) entre l'équipement UE et la passerelle PDN GW pour le flux de trafic entre une application (AP) (115) dans l'équipement UE (109), par l'intermédiaire de la passerelle PDN GW à un premier noeud ;
un dispositif client de sélection d'accès (ASC) (118) agencé dans l'équipement UE (109) est apte à mettre en oeuvre (129, 143) une activation de nouveaux accès réseau et/ou une sélection, modification ou désactivation d'accès réseau existants, sur la base des informations de sélection d'accès, dans le but de permettre le flux de trafic (116) ;
la sélection / activation / modification / désactivation (143, 144) de l'accès réseau étant déclenchée par une demande de connecteur envoyée (137) de l'application (AP) au dispositif client ASC (118), dans le but d'établir un moyen de communication de bout en bout incluant la porteuse de trafic (116) ;
**caractérisé en ce que** :
le dispositif client ASC (118) est apte à mettre en oeuvre la sélection / activation / modification / désactivation (143, 144) de l'accès réseau, sur la base d'informations de qualité de service (QoS) qui sont affectées (133) par une fonction de règles de facturation et politiques (PCRF) (111) à des paramètres de modèle de flux de trafic (TFT), dans lequel les informations de sélection d'accès (109) comportent la qualité de service (QoS), l'affectation définissant les propriétés d'une porteuse de trafic demandée et les paramètres de modèle TFT étant générés au cours d'une signalisation de service mise en oeuvre dans le but de demander la porteuse de trafic.
